# EUROPÄISCHE PATENTSCHRIFT

(11) **EP 3 205 530 B1**
(45) Veröffentlichungstag und Bekanntmachung des Hinweises auf die Patenterteilung: **07.04.2021**
(21) Anmeldenummer: 17153673.3
(22) Anmeldetag: 30.01.2017
(51) Int. Cl.: B60L 9/00, B60L 15/38, B60L 15/20, B60L 50/53, B60L 53/00

(54) **VERFAHREN ZUM BETREIBEN EINES ZUMINDEST ZEITWEISE ELEKTRISCH ANTREIBBAREN KRAFTFAHRZEUGS, STEUERGERÄT FÜR EIN KRAFTFAHRZEUG SOWIE ENTSPRECHENDES KRAFTFAHRZEUG**
METHOD FOR OPERATING AN AT LEAST TEMPORARILY ELECTRICALLY DRIVABLE MOTOR VEHICLE, CONTROL DEVICE FOR A MOTOR VEHICLE AND CORRESPONDING MOTOR VEHICLE
PROCÉDÉ DE FONCTIONNEMENT D'UN VÉHICULE AUTOMOBILE AU MOINS PARTIELLEMENT ÉLECTRIQUE, APPAREIL DE COMMANDE POUR UN VÉHICULE AUTOMOBILE ET VÉHICULE AUTOMOBILE CORRESPONDANT

(30) Priorität: 10.02.2016 DE 102016001495
(43) Veröffentlichungstag der Anmeldung: 16.08.2017
(73) Patentinhaber: Audi AG, 85045 Ingolstadt (DE)
(72) Erfinder: Ullrich, Christoph, 85055 Ingolstadt (DE); Schunk, Karin, 85057 Ingolstadt (DE)

(56) Entgegenhaltungen:
- DE-A1- 4 417 065
- DE-A1-102012 214 753
- DE-A1-102014 000 843

## Beschreibung

Die Erfindung betrifft ein Verfahren zum Betreiben eines zumindest zeitweise elektrisch antreibbaren Kraftfahrzeugs auf einer Straße. Die Erfindung betrifft weiterhin ein Kraftfahrzeug.

Das Verfahren dient dem Betreiben des Kraftfahrzeugs, insbesondere also dem Durchführen eines Fahrbetriebs des Kraftfahrzeugs auf der Straße. Das Kraftfahrzeug ist zumindest zeitweise elektrisch antreibbar. Hierzu verfügt es über wenigstens eine elektrische Maschine. Das Kraftfahrzeug kann also beispielsweise als Elektrofahrzeug oder als Hybridfahrzeug ausgestaltet sein. Zum Betreiben des Kraftfahrzeugs beziehungsweise zum Durchführen des Fahrbetriebs wird elektrische Energie benötigt. Während diese im Falle des Hybridfahrzeugs von einem Antriebsaggregat, beispielsweise einer Brennkraftmaschine, im Zusammenspiel mit einem Generator bereitgestellt werden kann, muss sie, insbesondere für das Elektrofahrzeug, vollständig von extern bereitgestellt werden, beispielsweise im Rahmen eines Ladevorgangs an einer Ladestation oder einer Steckdose.

So ist beispielsweise aus der Druckschrift DE 10 2008 055 881 A1 ein Verfahren zum automatischen Laden von vollständig oder teilweise elektrisch betriebenen Fahrzeugen bekannt. Dabei wird ein Fahrzeug eingesetzt, das ausgestattet ist mit Sensoren zur Umgebungserfassung, Navigation und Kollisionsvermeidung, einer Fahrzeugsteuerung zum selbstgesteuerten Fahren des Fahrzeugs; einem Ladesystem zum elektrischen Laden des Fahrzeugs; und mindestens einem Ladekontakt, der mit mindestens einem Ladekontakt der Ladestation am Ladeort funktional verbindbar ist; ein Ladeort verwendet wird, der ausgestattet ist mit mindestens einer Ladestation, die mindestens einen Ladekontakt aufweist, der mit einem Ladekontakt eines zu ladenden Fahrzeugs funktional verbindbar ausgestaltet ist; das Fahrzeug an einem beliebigen Startpunkt in einem Übergabebereich startet; das Fahrzeug selbstgesteuert einen ausgewählten Ladeort ansteuert; am ausgewählten Ladeort zwischen dem Fahrzeug und der Ladestation des Ladeorts ein Ladekontakt besteht; das Fahrzeug selbstgesteuert den Ladeort verlässt und einen ausgewählten Übernahmebereich anfährt.

Weiterhin zeigt die Druckschrift US 2010/0121509 A1 ein Fahrzeug sowie eine Verkehrseinrichtung, wobei eine Vielzahl von Oberleitungen realisiert ist, über welche dem Fahrzeug elektrische Energie bereitgestellt werden kann.

Es ist nun Aufgabe der Erfindung, ein Verfahren zum Betreiben eines zumindest zeitweise elektrisch antreibbaren Kraftfahrzeugs auf einer Straße vorzuschlagen, welches gegenüber bekannten Verfahren Vorteile aufweist, insbesondere einen durchgehenden Fahrbetrieb des Kraftfahrzeugs bei hohem Komfort für einen Fahrer des Kraftfahrzeugs ermöglicht.

Dies wird erfindungsgemäß mit einem Verfahren mit den Merkmalen des Anspruchs 1 erreicht. Dabei ist vorgesehen, dass ein Steuergerät nach Anforderung einer Automatikbetriebsart einen vollautonomen Fahrbetrieb des Kraftfahrzeugs durchführt, wobei eine Quersteuerung des Kraftfahrzeugs derart durchgeführt wird, dass ein zuvor ausgefahrener Ladearm des Kraftfahrzeugs in elektrischen Kontakt mit einer an oder auf der Straße angeordneten Ladeleitung tritt, wobei mittels von der Ladeleitung über den Ladearm zur Verfügung gestellter elektrischer Energie ein Energiespeicher des Kraftfahrzeugs aufgeladen und/oder eine Antriebseinrichtung des Kraftfahrzeugs zur Durchführung des Fahrbetriebs betrieben wird, und wobei eine Längssteuerung des Kraftfahrzeugs derart erfolgt, dass eine vorgegebene Längsgeschwindigkeit eingehalten wird, bis ein Abstand des Kraftfahrzeugs zu einem vorausfahrenden Kraftfahrzeug einen vorgegebenen Mindestabstand erreicht.

Die Anforderung der Automatikbetriebsart kann beispielsweise von dem Fahrer des Kraftfahrzeugs und/oder einer Fahrerassistenzeinrichtung erzeugt werden. Zur Erzeugung der Anforderung durch den Fahrer kann ein entsprechendes Bedienelement, beispielsweise ein Knopf, ein Schalter oder dergleichen, vorgesehen sein. Sobald die Anforderung der Automatikbetriebsart vorliegt, übernimmt das Steuergerät den Fahrbetrieb des Kraftfahrzeugs, sodass der Fahrbetrieb nachfolgend vollautonom durchgeführt wird. Darunter ist zu verstehen, dass das Steuergerät sowohl die Quersteuerung als auch die Längssteuerung des Kraftfahrzeugs übernimmt. Die Längssteuerung bezeichnet das Einstellend der Fahrgeschwindigkeit beziehungsweise Längsgeschwindigkeit des Kraftfahrzeugs, mit welcher sich das Kraftfahrzeug in Fahrtrichtung bewegt. Die Quersteuerung umfasst beispielsweise ein Lenken des Kraftfahrzeugs, also bevorzugt das Auswählen und Einstellen eines bestimmten Lenkwinkels.

Die Quersteuerung des Kraftfahrzeugs wird derart durchgeführt, dass der elektrische Kontakt zwischen dem Ladearm und der Ladeleitung hergestellt wird. Die Ladeleitung liegt an oder auf der Straße vor. Beispielsweise ist die Ladeleitung eine Leitplanke beziehungsweise Schutzplanke oder bildet einen Bestandteil einer solchen. In diesem Fall kann die Ladeleitung beispielsweise als Ladeschiene ausgestaltet sein. Selbstverständlich kann jedoch die Ladeleitung auch in Form einer Oberleitung oder dergleichen vorliegen. Der Ladearm ist derart ausgebildet und an dem Kraftfahrzeug angeordnet, dass er mit der jeweiligen Ausgestaltung der Ladeleitung zum Herstellen des elektrischen Kontakts zusammenwirken kann.

Bevorzugt liegt der Ladearm an einer Seite beziehungsweise einer Seitenwand des Kraftfahrzeugs vor, beispielsweise auf der linken Seite oder der rechten Seite. Hierbei ist der Ladearm in zurückgezogenem Zustand vorzugsweise in einer Ladearmaufnahme des Kraftfahrzeugs angeordnet, welche besonders bevorzugt mittels einer Abdeckung, beispielsweise einer Klappe, verschließbar ist. In ausgefahrenem Zustand ragt der Ladearm über die Seite beziehungsweise die Seitenwand des Kraftfahrzeugs in Richtung der Ladeleitung über. Bevorzugt verfügt der Ladearm über eine Niveausteuerung oder Niveauregelung, mittels welcher er auf eine bestimmte Höhe einstellbar ist, insbesondere auf die Höhe der momentan an beziehungsweise auf der Straße vorliegenden Ladeleitung.

Die Quersteuerung erfolgt nun derart, dass das Kraftfahrzeug in Richtung der Ladeleitung gelenkt wird. Der Ladearm kann bereits bei Einleiten des vollautonomen Fahrbetriebs oder erst bei Unterschreiten eines bestimmten Abstands durch den Abstand zwischen dem Kraftfahrzeug und der Ladeleitung, ausgefahren werden. Ziel der Quersteuerung ist es zunächst, den elektrischen Kontakt zwischen der Ladeleitung und dem Ladearm herzustellen. Sobald dies erfolgt ist, kann von der Ladeleitung über den Ladearm elektrische Energie zur Verfügung gestellt werden, welche nachfolgend zum Laden des Energiespeichers des Kraftfahrzeugs und/oder zum Betreiben der Antriebseinrichtung des Kraftfahrzeugs herangezogen werden kann.

Die Antriebseinrichtung dient der Durchführung des Fahrbetriebs, insbesondere also der Bereitstellung eines auf das Antreiben des Kraftfahrzeugs gerichteten Drehmoments. Sobald der elektrische Kontakt zwischen dem Ladearm und der Ladeleitung vorliegt, wird nachfolgend bevorzugt die Quersteuerung derart durchgeführt, dass das Kraftfahrzeug einer bestimmten Fahrspur folgt und/oder der Abstand zwischen dem Kraftfahrzeug und der Ladeleitung konstant bleibt. Auf diese Art und Weise kann bereits mit einem vergleichsweise kleinen Ladearm eine zuverlässige Übertragung von elektrischer Energie zu dem Kraftfahrzeug realisiert werden.

Der vollautonome Fahrbetrieb des Kraftfahrzeugs umfasst auch die Längssteuerung. Diese wird derart durchgeführt, dass zunächst die vorgegebene Längsgeschwindigkeit eingehalten wird. Das Einhalten der Längsgeschwindigkeit ist vorgesehen, bis der momentane Abstand des Kraftfahrzeugs zu dem vorausfahrenden Fahrzeug den vorgegebenen Mindestabstand erreicht oder unterschreitet. Die vorgegebene Längsgeschwindigkeit ist daher bevorzugt derart gewählt, dass sie größer ist als die Geschwindigkeit des vorausfahrenden Fahrzeugs, um sich diesem anzunähern, bis der Mindestabstand vorliegt.

Zur Durchführung des vollautonomen Fahrbetriebs dient das Steuergerät, das Bestandteil der Fahrerassistenzeinrichtung des Kraftfahrzeugs sein kann. Das Steuergerät beziehungsweise die Fahrerassistenzeinrichtung kann über wenigstens einen Sensor verfügen, beispielsweise einen Radarsensor, Kamerasensor, Ultraschallsensor oder dergleichen.

Mit der beschriebenen Vorgehensweise kann die Reichweite des Kraftfahrzeugs deutlich vergrößert werden, weil zumindest zeitweise die Ladeleitung zur Bereitstellung von elektrischer Energie zur Verfügung steht. Gleichzeitig wird entlang der Ladeleitung ein vollautonomer Fahrbetrieb des Kraftfahrzeugs durchgeführt. Für den Fahrer des Kraftfahrzeugs ergibt sich dabei der Eindruck, als ob das Kraftfahrzeug von der Ladeleitung geführt sei. Es wird sich somit eine höhere Akzeptanz bezüglich des vollautonomen Fahrbetriebs einstellen als bei einem freien, ebenfalls vollautonomen Fahrbetrieb des Kraftfahrzeugs, während welchem sich das Kraftfahrzeug frei auf der Straße bewegen kann, ohne mit der Ladeleitung zu interagieren. Die höhere Akzeptanz wird sich insbesondere auch deswegen einstellen, weil der elektrische Kontakt zwischen dem Ladearm und der Ladeleitung mittels der Quersteuerung automatisch hergestellt wird, ohne dass der Fahrer eingreifen muss. Gerade ungeübten Fahrern werden mit dieser Vorgehensweise mögliche Unsicherheiten genommen.

Im Rahmen einer weiteren Ausgestaltung der Erfindung ist vorgesehen, dass nach dem Erreichen des Mindestabstands durch den Abstand zu dem vorausfahrenden Fahrzeug in eine Kolonnenfahrtbetriebsart umgeschaltet wird, in der die Längsgeschwindigkeit an die Geschwindigkeit des vorausfahrenden Fahrzeugs angeglichen wird, sodass ein dem Mindestabstand entsprechender Abstand eingehalten wird. Auch in der Kolonnenfahrtbetriebsart ist der vollautonome Fahrbetrieb des Kraftfahrzeugs vorgesehen, sodass also das Steuergerät sowohl die Quersteuerung als auch die Längssteuerung des Kraftfahrzeugs übernimmt.

In der Kolonnenfahrtbetriebsart soll das Kraftfahrzeug zumindest mit dem vorausfahrenden Fahrzeug eine Kolonne bilden, und mithin üblicherweise einen konstanten Abstand zu diesem einhalten. Hierzu wird die Längsgeschwindigkeit an die Geschwindigkeit des vorausfahrenden Fahrzeugs angeglichen, sodass die Längsgeschwindigkeit dieser entspricht. Es kann vorgesehen sein, dass aus der Automatikbetriebsart lediglich dann in die Kolonnenfahrtbetriebsart umgeschaltet wird, wenn das vorausfahrende Fahrzeug ebenfalls zur Ausführung des erfindungsgemäßen Verfahrens vorgesehen beziehungsweise ausgerüstet ist. Dies kann durch einen entsprechenden Datenaustausch des Kraftfahrzeugs mit dem vorausfahrenden Fahrzeug festgestellt werden. Durch das Einhalten des Mindestabstands zu dem vorausfahrenden Fahrzeug kann der zum Durchführen des Fahrbetriebs notwendige Energiebedarf des Kraftfahrzeugs aufgrund der Reduzierung des Luftwiderstands deutlich herabgesetzt werden.

Die Erfindung sieht vor, dass die Längsgeschwindigkeit nach Anforderung der Automatikbetriebsart auf eine erste Vorgabegeschwindigkeit und nach dem Kontaktieren der Ladeleitung durch den Ladearm auf eine zweite Vorgabegeschwindigkeit gesetzt wird. Es ist vorgesehen, bis zum Erreichen der Ladeleitung eine geringere Geschwindigkeit zu verwenden, um ein zuverlässiges Kontaktieren der Ladeleitung durch den Ladearm zu ermöglichen. Nach dem Kontaktieren wird die Längsgeschwindigkeit erhöht und folglich ist die erste Vorgabegeschwindigkeit kleiner als die zweite Vorgabegeschwindigkeit.

Dabei ist jedoch die zweite Vorgabegeschwindigkeit größer als die Geschwindigkeit des (eventuell) vorausfahrenden Fahrzeugs, um den Abstand zu diesem zu reduzieren. Hierbei ist vorgesehen, dass die zweite Vorgabegeschwindigkeit einen ersten Wert aufweist, wenn das Kraftfahrzeug kein vorausfahrendes Fahrzeug feststellt, und einen zweiten Wert, wenn auf ein vorausfahrendes Fahrzeug erkannt wird. Der erste Wert ist dabei niedriger als der zweite Wert. Wird also kein vorausfahrendes Fahrzeug erkannt, so soll mit dem ersten Wert der zweiten Vorgabegeschwindigkeit der energiegünstige Fahrbetrieb durchgeführt werden. Wird dagegen festgestellt, dass ein vorausfahrendes Fahrzeug vorliegt, so soll zu diesem aufgeschlossen werden, um den Energieverbrauch durch eine Kolonnenfahrt, insbesondere das Einleiten der Kolonnenfahrtbetriebsart, weiter zu reduzieren. Der zweite Wert der zweiten Vorgabegeschwindigkeit ist entsprechend größer als die momentane Geschwindigkeit des vorausfahrenden Fahrzeugs.

Im Rahmen einer weiteren Ausgestaltung der Erfindung kann vorgesehen sein, dass der Mindestabstand in Abhängigkeit von der Längsgeschwindigkeit ausgewählt wird. Der Mindestabstand wird dabei derart festgelegt, dass stets ein zuverlässiges Abbremsen des Fahrzeugs möglich ist, unabhängig von dem momentanen Fahrmanöver des vorausfahrenden Fahrzeugs. Bevorzugt ist der Mindestabstand umso größer, je größer die Längsgeschwindigkeit ist.

Eine weitere Ausgestaltung der Erfindung sieht vor, dass das Kraftfahrzeug bei Anzeige eines Einscherwunschs eines weiteren Kraftfahrzeugs den Abstand zu dem vorausfahrenden Fahrzeug durch Verringern der Längsgeschwindigkeit oder zu einem nachfolgenden Fahrzeug durch Vergrößern der Längsgeschwindigkeit zur Schaffung einer Verkehrslücke für das weitere Kraftfahrzeug vergrößert. Das weitere Kraftfahrzeug ist bevorzugt ebenso zur Durchführung des erfindungsgemäßen Verfahrens vorgesehen. Der Einscherwunsch wird beispielsweise über eine drahtlose Verbindung, insbesondere eine Funkverbindung, an das Kraftfahrzeug übermittelt. Er zeigt an, dass das weitere Kraftfahrzeug in die Kolonne aus dem Kraftfahrzeug und dem vorausfahrenden Fahrzeug und/oder dem nachfolgenden Fahrzeug einscheren möchte.

Um dies zu ermöglichen, soll die Verkehrslücke für das weitere Kraftfahrzeug geschaffen werden. Dies kann durch das Vergrößern des Abstands zu dem vorausfahrenden Fahrzeug oder dem nachfolgenden Fahrzeug realisiert werden. Im Falle des vorausfahrenden Fahrzeugs wird hierzu die Längsgeschwindigkeit verringert und im Falle des nachfolgenden Fahrzeugs vergrößert. Sobald die Verkehrslücke Abmessungen aufweist, welche das Einscheren des weiteren Kraftfahrzeugs ermöglichen, kann die Quersteuerung des weiteren Kraftfahrzeugs derart erfolgen, dass es in die Verkehrslücke hineingelenkt wird. Insbesondere führt das weitere Kraftfahrzeug hierbei ebenfalls einen vollautonomen Fahrbetrieb im Rahmen der Automatikbetriebsart durch.

Eine weitere Ausgestaltung der Erfindung sieht vor, dass das Kraftfahrzeug bei Anzeige eines Ausscherwunschs des vorausfahrenden Fahrzeugs durch Verringern der Längsgeschwindigkeit oder des nachfolgenden Fahrzeugs durch Vergrößern der Längsgeschwindigkeit den Abstand zu diesem vergrößert. Das vorausfahrende Fahrzeug beziehungsweise das nachfolgende Fahrzeug übermittelt den Ausscherwunsch wiederum drahtlos, also beispielsweise über Funk. Sobald der Ausscherwunsch von dem Kraftfahrzeug festgestellt wurde, wird der Abstand zu dem entsprechenden Fahrzeug vergrößert, also beispielsweise durch Verringern der Längsgeschwindigkeit oder durch Vergrößern der Längsgeschwindigkeit. Auf diese Art und Weise wird dem Fahrzeug, welches aus der Kolonne ausscheren möchte, hierzu ausreichend Platz gegeben.

Weiterhin kann es im Rahmen einer weiteren vorteilhaften Ausgestaltung der Erfindung vorgesehen sein, dass bei einem Ausscherwunsch des Kraftfahrzeugs ein Ausschersignal an das vorausfahrende Fahrzeug und/oder das nachfolgende Fahrzeug gesendet und/oder der Abstand von dem vorausfahrenden Fahrzeug durch Verringern der Längsgeschwindigkeit vergrößert wird. Der Ausscherwunsch des Kraftfahrzeugs kann beispielsweise durch eine entsprechende Bedienhandlung des Fahrers ausgelöst werden. Auch die Fahrerassistenzeinrichtung kann den Ausscherwunsch erzeugen.

Liegt der Ausscherwunsch vor, so wird beispielsweise das Ausschersignal ausgesendet, beispielsweise nur an das vorausfahrende Fahrzeug, nur an das nachfolgende Fahrzeug oder sowohl an das vorausfahrende Fahrzeug als auch an das nachfolgende Fahrzeug. Dies ist insbesondere der Fall, wenn das vorausfahrende Fahrzeug und/oder das nachfolgende Fahrzeug analog zu dem Kraftfahrzeug ausgestaltet sind und mithin der Durchführung des erfindungsgemäßen Verfahrens dienen können. Ist dies der Fall, so werden das vorausfahrende Fahrzeug, das nachfolgende Fahrzeug oder beide vorzugsweise jeweils ihren Abstand zu dem Kraftfahrzeug vergrößern, um dessen Ausscheren problemlos zu ermöglichen.

Zusätzlich oder alternativ kann auch das Kraftfahrzeug seine Längsgeschwindigkeit verringern, um auf diese Art und Weise den Abstand zu dem vorausfahrenden Fahrzeug zu vergrößern. Erreicht der Abstand zu dem vorausfahrenden Fahrzeug eine ausreichende Größe, so kann das Ausscheren vorgenommen werden.

Eine bevorzugte Weiterbildung der Erfindung sieht vor, dass bei mehreren hintereinander in der Kolonnenfahrtbetriebsart in einer Kolonne fahrenden Kraftfahrzeugen eines der Kraftfahrzeuge als Führungsfahrzeug ausgewählt und durch entsprechende Durchführung von Quersteuerung und/oder Längssteuerung in Fahrtrichtung als vorderstes Kraftfahrzeug angeordnet wird. Das Auswählen des Führungsfahrzeugs erfolgt vorzugsweise durch drahtlose Kommunikation zwischen den in der Kolonne fahrenden Kraftfahrzeugen. Hierzu werden beispielsweise Eigenschaften der Kraftfahrzeuge, beispielsweise Ausstattungslisten oder dergleichen, zwischen den Kraftfahrzeugen ausgetauscht.

Anhand der Eigenschaften verständigen sich die Kraftfahrzeuge auf das Führungsfahrzeug. Beispielsweise wird das Kraftfahrzeug mit der besten Ausrüstung, insbesondere der besten Sensorausrüstung, als Führungsfahrzeug ausgewählt. Nachdem das Führungsfahrzeug ausgewählt wurde, führt dieses einen vollautonomen Fahrbetrieb durch, wobei die Quersteuerung und/oder Längssteuerung derart erfolgt, das es in Fahrtrichtung der Kolonne als deren vorderstes Kraftfahrzeug angeordnet wird.

Schließlich kann es in einer weiteren Ausgestaltung der Erfindung vorgesehen sein, dass in der Automatikbetriebsart und/oder der Kolonnenfahrtbetriebsart, insbesondere mittels einer Navigationseinrichtung und/oder anhand der Ladeleitung ermittelter Informationen, der Abstand des Kraftfahrzeugs zu einem vorausliegenden Straßenabzweig ermittelt und bei Unterschreiten eines bestimmten Abstands einem Fahrer des Kraftfahrzeugs ein Warnsignal übermittelt wird. Unter dem Straßenabzweig ist eine von der Straße abzweigende weitere Straße zu verstehen. Der Straßenabzweig liegt also beispielsweise in Form einer Autobahnausfahrt, einer Kreuzung oder dergleichen vor.

Es kann vorgesehen sein, den Abstand des Kraftfahrzeugs zu dem vorausliegenden Straßenabzweig zu ermitteln, insbesondere dem unmittelbar vorausliegenden Straßenabzweig. Unterschreitet dieser Abstand den bestimmten Abstand, so kann dies dem Fahrer des Kraftfahrzeugs mittels des Warnsignals angezeigt werden. Das Warnsignal kann ein optisches, akustisches oder haptisches Signal sein. Der Abstand des Kraftfahrzeugs zu dem Straßenabzweig kann beispielsweise mithilfe der Navigationseinrichtung erfolgen.

Dabei ist es bevorzugt vorgesehen, eine Fahrstrecke des Kraftfahrzeugs daraufhin zu prüfen, ob das Kraftfahrzeug an dem Straßenabzweig von der Straße abfahren muss, beispielsweise auf die weitere Straße. Vorzugsweise wird nun das Warnsignal lediglich dann übermittelt, wenn dies der Fall ist. Zusätzlich oder alternativ kann der Abstand auch mittels Informationen ermittelt werden, die von der Ladeleitung bereitgestellt werden. Beispielsweise kann in einem bestimmten Abstand zu dem Straßenabzweig an der Ladeleitung eine Markierung vorgesehen sein. Diese Markierung kann beispielsweise optischer oder haptischer Natur sein.

Wie bereits vorstehend erläutert, kann es vorgesehen sein, das Warnsignal lediglich zu übermitteln, wenn erkannt wird, dass das Kraftfahrzeug an dem Straßenabzweig von der Straße abfahren soll. Alternativ ist es selbstverständlich möglich, dass das Warnsignal für jeden vorausliegenden Straßenabzweig übermittelt wird. Beispielsweise kann der Fahrer des Kraftfahrzeugs zwischen diesen beiden unterschiedlichen Betriebsmodi umschalten.

Die Erfindung betrifft weiterhin ein Steuergerät zum Betreiben eines zumindest zeitweise elektrisch antreibbaren Kraftfahrzeugs auf einer Straße, insbesondere zur Durchführung des Verfahrens gemäß den vorstehenden Ausführungen. Es ist vorgesehen, dass das Steuergerät dazu ausgebildet ist, nach Anforderung einer Automatikbetriebsart einen vollautonomen Fahrbetrieb des Kraftfahrzeugs durchzuführen, wobei eine Quersteuerung des Kraftfahrzeugs derart durchgeführt wird, dass ein zuvor ausgefahrener Ladearm des Kraftfahrzeugs in elektrischen Kontakt mit einer an oder auf der Straße angeordneten Ladeleitung tritt, wobei mittels von der Ladeleitung über den Ladearm zur Verfügung gestellte elektrische Energie ein Energiespeicher des Kraftfahrzeugs aufgeladen und/oder eine Antriebseinrichtung des Kraftfahrzeugs zur Durchführung des Fahrbetriebs betrieben wird, und wobei eine Längssteuerung des Kraftfahrzeugs derart erfolgt, dass eine vorgegebene Längsgeschwindigkeit eingehalten wird, bis ein Abstand des Kraftfahrzeugs zu einem vorausfahrenden Fahrzeug einen vorgegebenen Mindestabstand erreicht.

Auf die Vorteile einer derartigen Ausgestaltung des Steuergeräts beziehungsweise einer derartigen Vorgehensweise wurde bereits eingegangen. Sowohl das Steuergerät als auch das Verfahren können gemäß den vorstehenden Ausführungen weitergebildet sein, sodass insoweit auf diese verwiesen wird.

Die Erfindung betrifft schließlich ein Kraftfahrzeug zur Durchführung des vorstehend beschriebenen Verfahrens und/oder mit einem Steuergerät gemäß den vorstehenden Ausführungen. Auf letztere wird wiederum ausdrücklich Bezug genommen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Draufsicht auf ein Kraftfahrzeug, während dieses einen Fahrbetrieb auf einer Straße mit einer Ladeleitung durchführt,
- Figur 2: eine schematische Darstellung einer ersten Fahrsituation für das Kraftfahrzeug, sowie
- Figur 3: eine schematische Darstellung einer zweiten Fahrsituation für das Kraftfahrzeug.

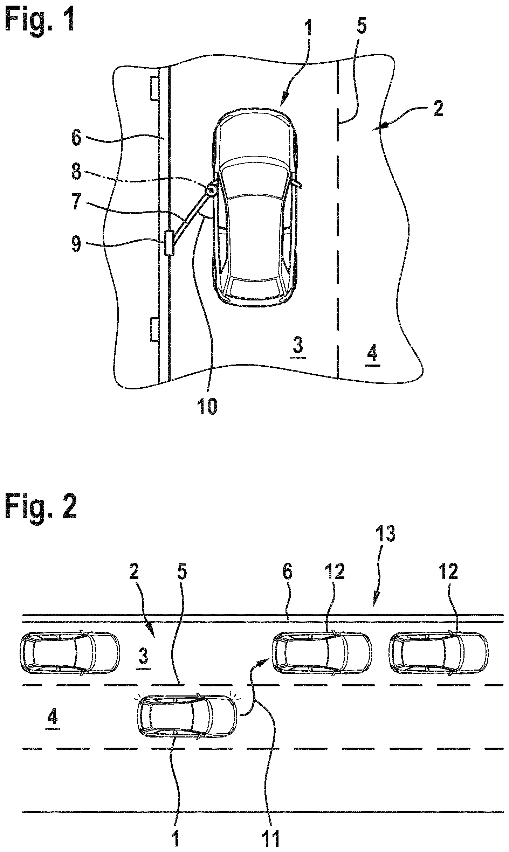

Die Figur 1 zeigt eine Draufsicht auf ein Kraftfahrzeug 1 während eines Fahrbetriebs auf einer Straße 2. Die Straße 2 verfügt beispielsweise über mehrere Fahrspuren 3 und 4, wobei selbstverständlich auch mehr als zwei Fahrspuren vorliegen können. In dem hier dargestellten Ausführungsbeispiel wird die Fahrspur 3 einerseits von einem Mittelstreifen 5 und andererseits von einer Ladeleitung 6 begrenzt. Die in dem dargestellten Ausführungsbeispiel als Ladeschiene ausgestaltete Ladeleitung 6 dient dem Bereitstellen von elektrischer Energie für das Kraftfahrzeug 1.

Zum Aufnehmen der von der Ladeleitung 6 bereitgestellten elektrischen Energie verfügt das Kraftfahrzeug 1 über einen Ladearm 7, welcher in dem hier dargestellten Ausführungsbeispiel um eine Drehachse 8 schwenkbar an dem Kraftfahrzeug 1 beziehungsweise einer Seitenwand des Kraftfahrzeugs 1 gelagert ist. Auf seiner dem Kraftfahrzeug 1 abgewandten Seite weist der Ladearm 7 einen Kontaktbereich 9 auf, mit welchem er in elektrischen Kontakt mit der Ladeleitung 6 treten kann. Der Ladearm 7 ist beispielsweise von einem Federelement 10 federkraftbeaufschlagt. Die Federkraft ist dabei derart ausgerichtet, dass der Kontaktbereich 9 in Richtung der Ladeleitung 6, insbesondere an die Ladeleitung 6, gedrängt wird.

Die Figur 2 zeigt das Kraftfahrzeug 1 in einer ersten Fahrsituation. In dieser wird das Kraftfahrzeug 1 beispielsweise zunächst manuell betrieben. Nachfolgend wird eine Automatikbetriebsart angefordert, beispielsweise durch einen Fahrer des Kraftfahrzeugs oder durch eine Fahrerassistenzeinrichtung. Ab der Aufforderung führt ein hier nicht dargestelltes Steuergerät des Kraftfahrzeug 1 einen vollautonomen Fahrbetrieb des Kraftfahrzeugs 1 durch. Dabei erfolgt eine Quersteuerung des Kraftfahrzeug 1 derart, dass der Ladearm 7 in elektrischen Kontakt mit der Ladeleitung 6 treten kann.

Hierzu bewirkt die Quersteuerung eine Verlagerung des Kraftfahrzeugs 1 auf die die Ladeleitung 6 aufweisende Fahrspur 3, in dem hier dargestellten Beispiel also von der Fahrspur 4 auf die Fahrspur 3 in Richtung des Pfeils 11. Dabei ordnet sich das Kraftfahrzeug 1 hinter einem vorausfahrenden Fahrzeug 12 oder mehreren vorausfahrenden Fahrzeugen 12 ein, sodass das Kraftfahrzeug 1 zusammen mit den vorausfahrenden Fahrzeugen 12 eine Kolonne 13 bildet. Hierzu wird im Rahmen des vollautonomen Fahrbetriebs zudem eine Längssteuerung des Kraftfahrzeugs 1 derart durchgeführt, dass eine vorgegebene Längsgeschwindigkeit eingehalten wird, bis der Abstand des Kraftfahrzeugs 1 zu dem vorausfahrenden Fahrzeug 12 einen vorgegebenen Mindestabstand erreicht oder unterschreitet.

Nachdem im Rahmen der Automatikbetriebsart das Kraftfahrzeug 1 derart gesteuert wurde, dass der elektrische Kontakt zwischen der Ladeleitung 6 und dem Ladearm 7 vorliegt und zudem der Abstand des Kraftfahrzeugs 1 zu dem vorausfahrenden Fahrzeug 12 dem Mindestabstand entspricht, so kann aus der Automatikbetriebsart in die Kolonnenfahrtbetriebsart umgeschaltet werden. In dieser wird die Längsgeschwindigkeit des Kraftfahrzeugs 1 an die Geschwindigkeit des vorausfahrenden Fahrzeugs 12 angeglichen, sodass der dem Mindestabstand entsprechende Abstand eingehalten wird.

Auch in der Kolonnenfahrtbetriebsart wird weiterhin der vollautonome Fahrbetrieb durchgeführt. Das bedeutet, dass sowohl die Quersteuerung als auch die Längssteuerung von dem Steuergerät übernommen werden. Die Quersteuerung erfolgt beispielsweise derart, dass der Abstand des Kraftfahrzeugs 1 zu der Ladeleitung 6 konstant oder zumindest nahezu konstant bleibt. Die Längsgeschwindigkeit wird derart eingestellt, dass der Abstand zu dem vorausfahrenden Fahrzeug 12 konstant bleibt.

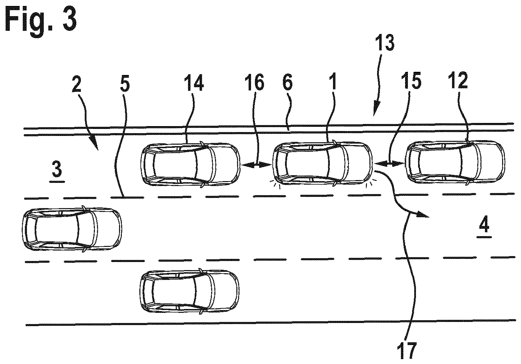

Die Figur 3 zeigt das Kraftfahrzeug 1 in einer zweiten Fahrsituation. Dargestellt ist das Kraftfahrzeug 1, das vorausfahrende Fahrzeug 12 sowie ein nachfolgendes Fahrzeug 14, die auf der Fahrspur 3 als Kolonne 13 fahren. Die Fahrzeuge 12 und 14 werden bevorzugt analog zu dem Kraftfahrzeug 1 betrieben. Das Kraftfahrzeug 1 möchte aus der Kolonne 13 ausscheren. Es sendet daher an das vorausfahrende Fahrzeug 12 und das nachfolgende Fahrzeug 14 ein Ausschersignal.

Der vollautonome Fahrbetrieb für die Fahrzeuge 12 und 14 sowie das Kraftfahrzeug 1 wird nachfolgend derart durchgeführt, dass sich der Abstand der Fahrzeuge 12 und 14 zu dem Kraftfahrzeug 1 vergrößert. Dies ist durch die Doppelpfeile 15 und 16 angedeutet. Ist der Abstand ausreichend groß, so kann nachfolgendes Kraftfahrzeug 1 aus der Kolonne 13 gemäß dem Pfeil 17 ausscheren. Auch das Ausscheren erfolgt vorzugsweise im Rahmen des vollautonomen Fahrbetriebs des Kraftfahrzeugs 1, also vollautomatisch durch entsprechendes Durchführen der Quersteuerung und der Längssteuerung.

Mit dem vorstehend beschriebenen Kraftfahrzeug 1 beziehungsweise dem Verfahren zu dessen Betreiben kann ein vollautonomer elektrischer Fahrbetrieb des Kraftfahrzeugs 1 auch über längere Strecken realisiert werden. Bevorzugt fährt das Kraftfahrzeug 1 ausschließlich elektrisch, wozu insbesondere in der Automatikbetriebsart und/oder der Kolonnenfahrtbetriebsart die von der Ladeleitung 6 bereitgestellte elektrische Energie herangezogen wird.

Gleichzeitig kann ein Energiespeicher des Kraftfahrzeugs 1 mit der elektrischen Energie aufgeladen werden. Durch den vollautonomen Fahrbetrieb des Kraftfahrzeugs 1 und zudem das Fahren des Kraftfahrzeugs 1 sowie der Fahrzeuge 12 und 14 in der Kolonne 13 kann ein besonders energiesparender Fahrbetrieb realisiert werden. Zudem wird durch die zumindest optische Führung des Kraftfahrzeugs 1 durch die Ladeleitung 6 die Akzeptanz des vollautonomen Fahrbetriebs des Kraftfahrzeugs 1 verbessert.

## Patentansprüche

1. Verfahren zum Betreiben eines zumindest zeitweise elektrisch antreibbaren Kraftfahrzeugs (1) auf einer Straße (2), wobei ein Steuergerät nach Anforderung einer Automatikbetriebsart einen vollautonomen Fahrbetrieb des Kraftfahrzeugs (1) durchführt, wobei eine Quersteuerung des Kraftfahrzeugs (1) derart durchgeführt wird, dass ein zuvor ausgefahrener Ladearm (7) des Kraftfahrzeugs (1) in elektrischen Kontakt mit einer an oder auf der Straße (2) angeordneten Ladeleitung (6) tritt, wobei mittels von der Ladeleitung (6) über den Ladearm (7) zur Verfügung gestellter elektrischer Energie ein Energiespeicher des Kraftfahrzeugs (1) aufgeladen und/oder eine Antriebseinrichtung des Kraftfahrzeugs (1) zur Durchführung des Fahrbetriebs betrieben wird, und wobei eine Längssteuerung des Kraftfahrzeugs (1) derart erfolgt, dass eine vorgegebene Längsgeschwindigkeit eingehalten wird, bis ein Abstand des Kraftfahrzeugs (1) zu einem vorausfahrenden Fahrzeug (12) einen vorgegebenen Mindestabstand erreicht, **dadurch gekennzeichnet, dass** die Längsgeschwindigkeit nach Anforderung der Automatikbetriebsart auf eine erste Vorgabegeschwindigkeit und nach dem Kontaktieren der Ladeleitung (6) durch den Ladearm (7) auf eine zweite Vorgabegeschwindigkeit gesetzt wird, wobei die zweite Vorgabegeschwindigkeit größer ist als die erste Vorgabegeschwindigkeit und auf einen ersten Wert gesetzt wird, wenn kein vorausfahrendes Fahrzeug erkannt wird, und auf einen größeren zweiten Wert gesetzt wird, wenn auf ein vorausfahrendes Fahrzeug erkannt wird, wobei der zweite Wert größer ist als die momentane Geschwindigkeit des vorausfahrenden Fahrzeugs.

2. Verfahren nach Anspruch 1, **dadurch gekennzeichnet, dass** nach dem Erreichen des Mindestabstands durch den Abstand zu dem vorausfahrenden Fahrzeug (12) in eine Kolonnenfahrtbetriebsart umgeschaltet wird, in der die Längsgeschwindigkeit an die Geschwindigkeit des vorausfahrenden Fahrzeugs (12) angeglichen wird, sodass ein dem Mindestabstand entsprechender Abstand eingehalten wird.

3. Verfahren nach einem der vorhergehenden Ansprüche, **dadurch gekennzeichnet, dass** das Kraftfahrzeug (1) bei Anzeige eines Einscherwunschs eines weiteren Kraftfahrzeugs den Abstand zu dem vorausfahrenden Fahrzeug (12) durch Verringern der Längsgeschwindigkeit oder zu einem nachfolgenden Fahrzeug (14) durch Vergrößern der Längsgeschwindigkeit zur Schaffung einer Verkehrslücke für das weitere Kraftfahrzeug vergrößert.

4. Verfahren nach einem der vorhergehenden Ansprüche, **dadurch gekennzeichnet, dass** das Kraftfahrzeug (1) bei Anzeige eines Ausscherwunschs des vorausfahrenden Fahrzeugs (12) durch Verringern der Längsgeschwindigkeit oder des nachfolgenden Fahrzeugs (14) durch Vergrößern der Längsgeschwindigkeit den Abstand zu diesem vergrößert.

5. Verfahren nach einem der vorhergehenden Ansprüche, **dadurch gekennzeichnet, dass** bei einem Ausscherwunsch des Kraftfahrzeugs (1) ein Ausschersignal an das vorausfahrende Fahrzeug (12) und/oder das nachfolgende Fahrzeug (14) gesendet und/oder der Abstand von dem vorausfahrenden Fahrzeug (12) durch Verringern der Längsgeschwindigkeit vergrößert wird.

6. Verfahren nach einem der vorhergehenden Ansprüche, **dadurch gekennzeichnet, dass** bei mehreren hintereinander in der Kolonnenbetriebsart in einer Kolonne (13) fahrenden Kraftfahrzeugen (1) eines der Kraftfahrzeuge (1) als Führungsfahrzeug ausgewählt und durch entsprechende Durchführung von Quersteuerung und/oder Längssteuerung in Fahrtrichtung als vorderstes Kraftfahrzeug (1) angeordnet wird.

7. Verfahren nach einem der vorhergehenden Ansprüche, **dadurch gekennzeichnet, dass** in der Automatikbetriebsart und/oder der Kolonnenfahrtbetriebsart, insbesondere mittels einer Navigationseinrichtung und/oder anhand der Ladeleitung (6) ermittelter Informationen, der Abstand des Kraftfahrzeugs (1) zu einem vorausliegenden Straßenabzweig ermittelt und bei Unterschreiten eines bestimmten Abstands einem Fahrer des Kraftfahrzeugs (1) ein Warnsignal übermittelt wird.

8. Steuergerät zum Betreiben eines zumindest zeitweise elektrisch antreibbaren Kraftfahrzeugs (1) auf einer Straße (2), insbesondere zur Durchführung des Verfahrens nach einem oder mehreren der vorhergehenden Ansprüche, wobei das Steuergerät dazu ausgebildet ist, nach Anforderung einer Automatikbetriebsart einen vollautonomen Fahrbetrieb des Kraftfahrzeugs (1) durchzuführen, wobei eine Quersteuerung des Kraftfahrzeugs (1) derart durchgeführt wird, dass ein zuvor ausgefahrener Ladearm (7) des Kraftfahrzeugs (1) in elektrischen Kontakt mit einer an oder auf der Straße (2) angeordneten Ladeleitung (6) tritt, wobei mittels von der Ladeleitung (6) über den Ladearm (7) zur Verfügung gestellter elektrischer Energie ein Energiespeicher des Kraftfahrzeugs (1) aufgeladen und/oder eine Antriebseinrichtung des Kraftfahrzeugs (1) zur Durchführung des Fahrbetriebs betrieben wird, und wobei eine Längssteuerung des Kraftfahrzeugs (1) derart erfolgt, dass eine vorgegebene Längsgeschwindigkeit eingehalten wird, bis ein Abstand des Kraftfahrzeugs (1) zu einem vorausfahrenden Fahrzeug (12) einen vorgegebenen Mindestabstand erreicht, **dadurch gekennzeichnet, dass** die Längsgeschwindigkeit nach Anforderung der Automatikbetriebsart auf eine erste Vorgabegeschwindigkeit und nach dem Kontaktieren der Ladeleitung (6) durch den Ladearm (7) auf eine zweite Vorgabegeschwindigkeit gesetzt wird, wobei die zweite Vorgabegeschwindigkeit größer ist als die erste Vorgabegeschwindigkeit und auf einen ersten Wert gesetzt wird, wenn kein vorausfahrendes Fahrzeug erkannt wird, und auf einen größeren zweiten Wert gesetzt wird, wenn auf ein vorausfahrendes Fahrzeug erkannt wird, wobei der zweite Wert größer ist als die momentane Geschwindigkeit des vorausfahrenden Fahrzeugs.

9. Kraftfahrzeug (1) zur Durchführung des Verfahrens nach einem oder mehreren der Ansprüche 1 bis 7 und/oder mit einem Steuergerät nach Anspruch 8.

## Claims

1. Method for operating a motor vehicle (1) that can be driven at least temporarily electrically on a road (2) wherein, following a request for an automatic mode, a control device implements a fully autonomous driving mode of the motor vehicle (1), wherein a lateral control of the motor vehicle (1) is implemented such that a previously extended charging arm (7) of the motor vehicle (1) comes into electrical contact with a charging line (6) arranged in or on the road (2), wherein electrical energy provided by means of the charging line (6) is charged to an energy store of the motor vehicle (1) via the charging arm (7) and/or a drive apparatus of the motor vehicle (1) for implementing the driving mode is operated, and wherein a longitudinal control of the motor vehicle (1) takes place such that a specified longitudinal speed is maintained until a distance of the motor vehicle (1) to a preceding vehicle (12) reaches a specified minimum distance, **characterised in that**, following a request for automatic mode, the longitudinal speed is set to a first default speed and, after contact with the charging line (6) by the charging arm (7), is set to a second default speed, wherein the second default speed is greater than the first default speed and is set to a first value when no preceding vehicle is detected, and is set to a greater second value when a preceding vehicle is detected, wherein the second value is greater than the current speed of the preceding vehicle.

2. Method according to claim 1, **characterised in that**, once the minimum distance has been reached by the distance to the preceding vehicle (12) a switch is performed into a platooning mode, in which the longitudinal speed is matched to the speed of the preceding vehicle (12) such that a distance corresponding to the minimum distance is maintained.

3. Method according to any of the preceding claims, **characterised in that**, when a request to join from a further motor vehicle is displayed, the motor vehicle (1) increases the distance to the preceding vehicle (12) by reducing the longitudinal speed or to a subsequent vehicle (14) by increasing the longitudinal speed to create a gap in the traffic for the further motor vehicle.

4. Method according to any of the preceding claims, **characterised in that**, when a wish to leave from the preceding motor vehicle (12) is displayed, the motor vehicle (1) increases the distance by reducing the longitudinal speed or, when a wish to leave from the subsequent vehicle (14) is displayed, the motor vehicle increases the distance to by increasing the longitudinal speed.

5. Method according to any of the preceding claims, **characterised in that**, should the motor vehicle (1) wish to leave, a leave signal is sent to the preceding vehicle (12) and/or the subsequent vehicle (14) and/or the distance from the preceding vehicle (12) is increased by reducing the longitudinal speed.

6. Method according to any of the preceding claims, **characterised in that**, in the case of a plurality of motor vehicles (1) travelling one behind the other in a platoon (13) in platooning mode, one of the motor vehicles (1) is selected as the lead vehicle and is arranged as the front motor vehicle (1) by implementing lateral control and/or longitudinal control accordingly.

7. Method according to any of the preceding claims, **characterised in that**, in automatic mode and/or platooning mode, in particular by means of a navigation apparatus and/or information determined with the aid of the charging line (6), the distance of the motor vehicle (1) to an upcoming road junction is determined and a warning signal is transmitted to a driver of the motor vehicle (1) when the distance falls below a specified distance.

8. Control device for operating a motor vehicle (1) that can be driven at least temporarily electrically on a road (2), in particular for implementing the method according to one or more of the preceding claims, wherein the control device is designed to implement a fully autonomous driving mode of the motor vehicle (1) following a request for an automatic mode, wherein a lateral control of the motor vehicle (1) is implemented such that a previously extended charging arm (7) of the motor vehicle (1) comes into electrical contact with a charging line (6) arranged in or on the road (2), wherein electrical energy provided by means of the charging line (6) is charged to an energy store of the motor vehicle (1) via the charging arm (7) and/or a drive apparatus of the motor vehicle (1) for implementing the driving mode is operated, and wherein a longitudinal control of the motor vehicle (1) takes place such that a specified longitudinal speed is maintained until a distance of the motor vehicle (1) to a preceding vehicle (12) reaches a specified minimum distance, **characterised in that**, following a request for automatic mode, the longitudinal speed is set to a first default speed and, after contact with the charging line (6) by the charging arm (7), is set to a second default speed, wherein the second default speed is greater than the first default speed and is set to a first value when no preceding vehicle is detected, and is set to a greater second value when a preceding vehicle is detected, wherein the second value is greater than the current speed of the preceding vehicle.

9. Motor vehicle (1) for implementing the method according to one or more of the claims 1 to 7 and/or with a control device according to claim 8.

## Revendications

1. Procédé de fonctionnement d'un véhicule automobile (1) entraînable au moins temporairement électriquement sur une route (2), dans lequel un appareil de commande réalise à la demande d'un mode de fonctionnement automatique un mode de conduite complètement autonome du véhicule automobile (1), dans lequel une commande transversale du véhicule automobile (1) est réalisée de telle manière qu'un bras de charge (7) sorti précédemment du véhicule automobile (1) entre en contact électrique avec un câble de charge (6) agencé au niveau de ou sur la route (2), dans lequel, au moyen de l'énergie électrique fournie par le câble de charge (6) par le biais du bras de charge (7), un accumulateur d'énergie du véhicule automobile (1) est chargé et/ou un dispositif d'entraînement du véhicule automobile (1) est actionné pour la réalisation du mode de conduite, et dans lequel une commande longitudinale du véhicule automobile (1) est effectuée de telle manière qu'une vitesse longitudinale prédéfinie soit respectée jusqu'à ce qu'une distance du véhicule automobile (1) par rapport à un véhicule précédent (12) atteigne une distance minimale prédéfinie, **caractérisé en ce que** la vitesse longitudinale est placée à la demande du type de fonctionnement automobile à une première vitesse définie et après la mise en contact du câble de charge (6) par le bras de charge (7) à une seconde vitesse définie, dans lequel la seconde vitesse définie est supérieure à la première vitesse définie et est placée à une première valeur lorsqu'aucun véhicule précédent n'est détecté, et est placée à une seconde valeur supérieure lorsqu'un véhicule précédent est détecté, dans lequel la seconde valeur est supérieure à la vitesse momentanée du véhicule précédent.

2. Procédé selon la revendication 1, **caractérisé en ce qu'**après l'atteinte de la distance minimale par la distance par rapport au véhicule précédent (12), il est commuté dans un mode de fonctionnement de conduite en colonne, dans lequel la vitesse longitudinale est comparée à la vitesse du véhicule précédent (12) de sorte qu'une distance correspondant à la distance minimale soit respectée.

3. Procédé selon l'une quelconque des revendications précédentes, **caractérisé en ce que** le véhicule automobile (1) augmente, lors de l'affichage d'un souhait d'insertion dans une file d'un autre véhicule automobile, la distance par rapport au véhicule précédent (12) par diminution de la vitesse longitudinale ou par rapport à un véhicule suivant (14) par augmentation de la vitesse longitudinale pour la création d'un écart dans la circulation pour l'autre véhicule automobile.

4. Procédé selon l'une quelconque des revendications précédentes, **caractérisé en ce que** le véhicule automobile (1) augmente, lors de l'affichage d'un souhait de déboîtement du véhicule précédent (12) par diminution de la vitesse longitudinale ou du véhicule suivant (14) par augmentation de la vitesse longitudinale, la distance par rapport à celui-ci.

5. Procédé selon l'une quelconque des revendications précédentes, **caractérisé en ce que**, pour un souhait de déboîtement du véhicule automobile (1), un signal de déboîtement est envoyé au véhicule précédent (12) et/ou au véhicule suivant (14) et/ou la distance du véhicule précédent (12) est augmentée par diminution de la vitesse longitudinale.

6. Procédé selon l'une quelconque des revendications précédentes, **caractérisé en ce qu'**en cas de plusieurs véhicules automobiles (1) roulant dans une colonne (13) les uns derrière les autres dans le mode de fonctionnement en colonne, un des véhicules automobiles (1) est sélectionné comme véhicule de guidage et, par réalisation correspondante de commande transversale et/ou commande longitudinale, est agencé dans le sens de la conduite comme premier véhicule automobile (1).

7. Procédé selon l'une quelconque des revendications précédentes, **caractérisé en ce que**, dans le mode de fonctionnement automatique et/ou le mode de fonctionnement de conduite en colonne, en particulier au moyen d'un dispositif de navigation et/ou d'informations déterminées à l'aide du câble de charge (6), la distance du véhicule automobile (1) par rapport à un embranchement de route précédent est déterminée et, en cas de non-atteinte d'une distance déterminée, un signal d'avertissement est transmis à un conducteur du véhicule automobile (1).

8. Appareil de commande pour le fonctionnement d'un véhicule automobile (1) entraînable au moins temporairement électriquement sur une route (2), en particulier pour la réalisation du procédé selon l'une quelconque ou plusieurs des revendications précédentes, dans lequel l'appareil de commande est réalisé afin de réaliser à la demande d'un mode de fonctionnement automatique un mode de conduite complètement autonome du véhicule automobile (1), dans lequel une commande transversale du véhicule automobile (1) est réalisée de telle manière qu'un bras de charge (7) sorti précédemment du véhicule automobile (1) entre en contact électrique avec un câble de charge (6) agencé au niveau de ou sur la route (2), dans lequel, au moyen de l'énergie électrique fournie par le câble de charge (6) par le biais du bras de charge (7), un accumulateur d'énergie du véhicule automobile (1) est chargé et/ou un dispositif d'entraînement du véhicule automobile (1) est actionné pour la réalisation du mode de conduite, et dans lequel une commande longitudinale du véhicule automobile (1) est effectuée de telle manière qu'une vitesse longitudinale prédéfinie soit respectée jusqu'à ce qu'une distance du véhicule automobile (1) par rapport à un véhicule précédent (12) atteigne une distance minimale prédéfinie, **caractérisé en ce que** la vitesse longitudinale est placée à la demande du mode de fonctionnement automatique à une première vitesse définie et après la mise en contact du câble de charge (6) par le bras de charge (7) à une seconde vitesse définie, dans lequel la seconde vitesse définie est supérieure à la première vitesse définie et est placée à une première valeur lorsqu'aucun véhicule précédent n'est détecté, et est placée à une seconde valeur supérieure lorsqu'un véhicule précédent est détecté, dans lequel la seconde valeur est supérieure à la vitesse momentanée du véhicule précédent.

9. Véhicule automobile (1) pour la réalisation du procédé selon l'une quelconque ou plusieurs des revendications 1 à 7 et/ou avec un appareil de commande selon la revendication 8.
